# EUROPEAN PATENT APPLICATION

(11) **EP 4 793 107 A1**
(43) Date of publication of application: **19.08.2026**
(21) Application number: 25158272.2
(22) Date of filing: 17.02.2025
(51) Int. Cl.: B60R 21/207, B60R 21/231, B60R 21/2338

(54) **A SEAT-MOUNTED AIRBAG ASSEMBLY, AND THE USE OF SUCH ASSEMBLY IN A VEHICLE SEAT**

(71) Applicant: Autoliv Development AB, 447 83 Vårgårda (SE)
(72) Inventor: Ribillard, Damien, 76220 Gournay-en-Bray (FR); Hellot, Laurent, 76220 Gournay-en-Bray (FR); Lengaigne, Laurent, 76220 Gournay-en-Bray (FR); Gailhard, Carole, 76220 Gournay-en-Bray (FR); Halgrin, Julien, 76220 Gournay-en-Bray (FR); Charpentier, Frederic, 76220 Gournay-en-Bray (FR)
(74) Representative: AWA Sweden AB

(57) **Abstract**

A seat-mounted airbag assembly (1000) is provided. The assembly comprises a first lateral airbag (101A) configured to deploy adjacent to a first side of a vehicle seat (1) and a first wrap-around belt (201A) extending from an upper portion of a seat back (3) to a tensioning device (300) arranged at least partly underneath a seat pan (5). The first wrap-around belt (201A) is configured to be tensioned and form a reaction surface to the first airbag (100A). A lower end of the first wrap-around belt (201A) extends along a surface of the seat pan (5) towards a lower side of the seat pan (5) where it connects to the tensioning device (300). A portion of the lower end of the first wrap-around belt (201A) is received in a first tube (10A).

## Description

### Technical field

The present invention refers to a seat-mounted airbag assembly, and the use of such assembly in a vehicle seat.

### Technical background

It is well known to use airbags in vehicles to protect seated passengers. The airbags are traditionally supported by the vehicle body's frame structure. It is also known to have airbags integrated in the seat structure. This allows the passenger to be protected no matter seat position. The seat integrated airbags may by way of example be arranged on one lateral side of the seat back, or on opposing lateral sides of the seat back. The lateral airbag is typically supplemented with a belt that extends from an upper portion of the seat back to a tensioning device that is arranged underneath the seat pan. The belt typically extends in an interface between the seat cushion and the seat pan. The belt is slacked during normal operation and may even have an overlength to allow free setting of the seat back angle at the user's choice. In the event of an accident, the belt is configured to be tensioned by the belt tensioning device and form a reaction surface to the airbag as the airbag is inflated and deployed. The reaction surface promotes the airbag to be deployed in a direction towards the seat and the seated person. It has been shown that there is a need to protect the belt over time, to safeguard that it stays in position over time and also to ensure that the belt is not unduly pinched.

### Summary

It is an object of the present invention to provide a protection for the belt in the interface between the seat pan and the seat cushion.

Another object is to provide a protection for the belt that prevents any pinching of the belt.

Yet another object is to safeguard a low-frictional path for the belt in the event of an accident.

These and other objects that will be apparent from the following summary and description are achieved by a seat-mounted airbag assembly of claim 1 comprising:
a first lateral airbag configured to deploy adjacent to a first side of a vehicle seat;
a first wrap-around belt extending from an upper portion of a seatback to a tensioning device arranged at least partly underneath a seat pan, and wherein the first wrap-around belt is configured to be tensioned and form a reaction surface to the first airbag; wherein
a lower end of the first wrap-around belt extends along a surface of the seat pan towards a lower side of the seat pan where it connects to the tensioning device; and
wherein a portion of the lower end of the first wrap-around belt is received in a first tube.

It has been found that by arranging a portion of the lower end of the first wrap-around belt inside a tube, the lower belt portion may run freely along the interior of the tube without being pinched due to the weight of the seated passenger. Although it is to be understood that the seat cushion as such will be able to resiliently accommodate the major part of the weight of the seated passenger and also the outer shape of the tube, the tube is preferably rigid enough as seen in its cross-direction not to be squeezed to such extent that the belt is pinched inside the tube. Also, the interior of the tube offers a low friction should the belt be tensioned. The tube may be arranged to extend in any suitable direction along the seat pan from the tensioning device towards the seat back. The extension may be any suitable extension depending on the available space between the seat cushion and the seat pan, and the specific design and curvature of the seat pan.

The tube may be made of a plastic material, a composite material or a metal material.

The tube may be allowed to lift from the seat pan when tensioning the wrap-around belt by means of the tensioning device.

The seat-mounted airbag assembly may further comprise a second lateral airbag configured to deploy adjacent to a second side of the vehicle seat; a second wrap-around belt extending from an upper portion of the seat back to a tensioning device arranged at least partly underneath the seat pan, and wherein the second wrap-around belt is configured to be tensioned and form a reaction surface to the second airbag; wherein a lower end of the second wrap-around belt extends along a surface of the seat pan towards the lower side of the seat pan where it connects to the tensioning device; and wherein a portion of the lower end of the second wrap-around belt is received in a second tube.

The second lateral airbag and the second wrap-around belt have the same design and functionality as the first lateral airbag and the first wrap-around belt. The features and advantages discussed above in view of the first lateral airbag and the first wrap-around belt are equally and directly applicable to the second lateral airbag and the second wrap-around belt. Hence, for the sake of efficiency and to avoid undue repetition, reference is made to the sections above.

The first and the second lateral airbags and the first and the second wrap-around belts are preferably arranged on opposite lateral sides of the vehicle seat to thereby provide a protection to the seated passenger from two opposite sides, one from the near side (closest to the door) and one from the far side (longitudinal centreline of the vehicle). At least one of the two lateral airbags may be designed to deploy to form a frontal protection to thereby protect the chest portion and also provide a facial protection. The first and the second lateral airbags may be symmetric.

The first and second tubes may be bendable and flexible along their longitudinal extensions. By being bendable and flexible along its longitudinal direction, the tube, and thereby the portion of the wrap-around belt that is received in the tube can be forced to extend in a desired direction to thereby adapt to the available space in the seat pan or in the interface between the seat pan and the seat cushion.

The first and second tubes may be substantially form rigid as seen in a direction transverse their diameters. By being substantially form rigid as seen in a direction transverse its diameter, the wrap-around belt portion that is received in the tube will not be pinched inside the tube by the weight of the seated passenger. In the context of the invention, the term *"substantially form rigid"* is to be understood that the tube when arranged in the vehicle seat is rigid enough to bear the weight of a seated passenger without being so deformed that the belt portion that is received in the tube will be pinched. The skilled person realizes that it is not only the weight of the passenger as such that is of relevance to any deformation of the tube, but also the design of the seat pan and the design of the seat cushion.

The first and the second tubes may be inner-ribbed tubes. The ribs run along the inner surface of the tube in a spiral shaped pattern, thereby creating a series of raised structures or grooves. This type of tube is by way of example typically used as a vacuum cleaner hose or for bundling of cables. A ribbed tube is flexible and bendable which allows a great degree of freedom when arranging the tube across the seat pan in the available interspace between the seat pan and the seat cushion. The ribs further provide a non-continuous contact surface with the wrap-around belt portion that is received inside the tube. The non-continuous contact surface provides a reduced friction.

The portions of the first and the second wrap-around belt being received in a respective tube may be a cord. The term *"cord"* should in the context of the invention be understood as a long, slender rope, string or even a chain. The cross section may by way of example be circular or substantially circular. The cord may have a homogenous cross section or be made up of several strands twisted or woven together.

The cord may be joined to a belt where the belt is configured to extend and be in contact with the airbag upon inflation. As opposed to the cord having a circular or substantially circular cross section, the belt has a substantially flat cross section.

The first and the second tubes may be received in a groove in a top side of the seat pan. In addition, or as an alternative, the first and the second tubes may be received in a groove in a side wall of the seat pan. The groove may have a depth that allows the tube to be at least partially countersunk into the seat pan. The tube may be fully countersunk into the seat pan. The first and the second tubes may be received in separate grooves or in a common groove. The groove or grooves may extend across the top side of the seat pan only. The groove or grooves may extend from the top side of the seat pan and along a side wall towards the lower side of the seat pan. Alternatively, it may extend along the top side of the seat pan to the lower side of the seat pan via a through-going hole in the seat pan.

The respective tube may be held in place in the groove by one or more clips or a snap fit. The clip or snap-fit should preferably allow the tube to lift from the groove when tensioning the wrap-around belt by means of the tensioning device. The clip may be designed to break as a result of the wrap-around belt being tensioned.

The first and the second tubes may be arranged between the seat pan and a seat cushion covering the seat pan. The seat cushion will thereby protect the tube.

The first and the second wrap-around belts may connect to a common tensioning device. The tensioning device may comprise an actuator and a pulling arrangement. The actuator may be a pyrotechnically operated piston which in one end is connected to the pulling arrangement.

The common tensioning device may be arranged centrally underneath the seat pan. By being centrally arranged, the tensioning of the first and second wrap-around belts will be substantially uniform.

According to another aspect, the invention refers to the use of a seat-mounted airbag assembly according to any of claims 1-11 in a vehicle seat.

The seat-mounted airbag assembly with its features and advantages have been well described above. To avoid undue repetition, reference is made to the above arguments.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an, " "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

The invention will be described in more detail with reference to the appended schematic drawings, which show examples of a presently preferred embodiment of the invention.
Fig. 1 is a schematic overview of one embodiment of a vehicle seat with a seat-mounted airbag assembly comprising two lateral airbags arranged in the seat back.
Fig. 2 is a schematic front view of one embodiment of a vehicle seat with a seat-mounted airbag assembly where the two airbags have been deployed.
Fig. 3 is a schematic side view of a vehicle seat with a seat-mounted airbag assembly where the two airbags have been deployed.
Fig. 4 is a schematic overview of the seat pan with the lower ends of the wrap-around belt arrangements contained in a respective tube. The tubes and the belts are illustrated as being set to two different positions.
Fig. 5 is a schematic overview of the lower ends of the wrap-around belt arrangement contained in their respective tubes and connected to a tensioning device. The tubes and the belts are illustrated as being set to two different positions.

### Detailed description

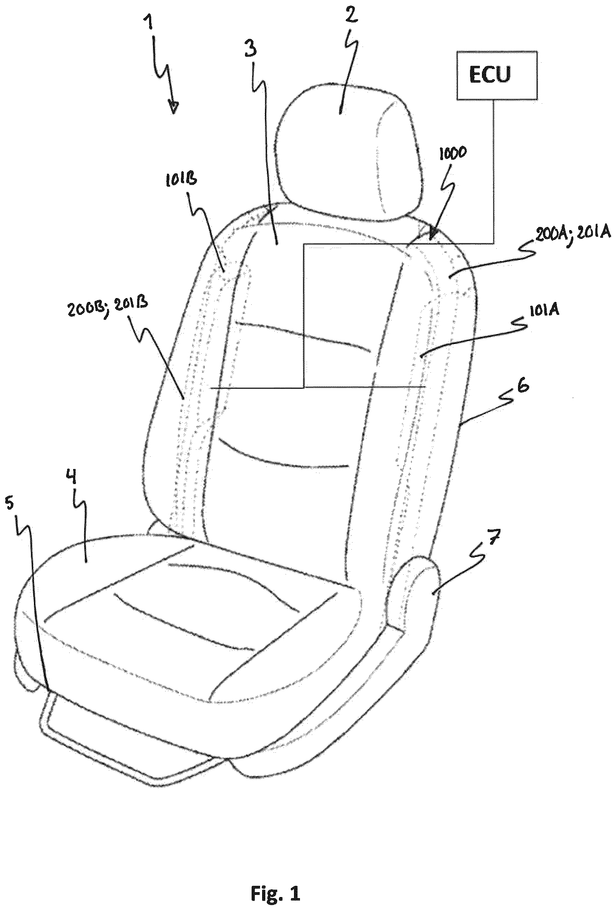

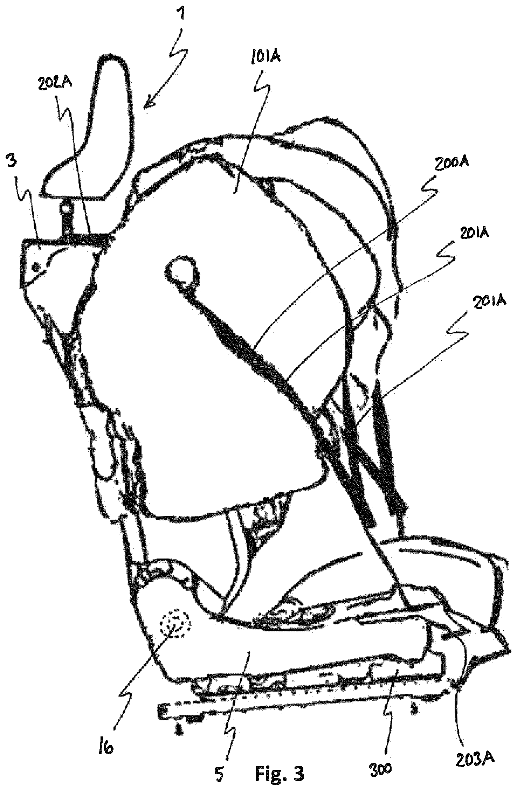

Starting with Fig. 1, one embodiment of a vehicle seat 1 with a seat-mounted airbag assembly 1000 with a first and a second lateral airbag 101A; 101B is schematically disclosed. The vehicle seat 1 comprises a head rest 2, a seat back 3 and a seat cushion 4 supported by a seat pan 5. The seat pan 5 is arranged inside the vehicle seat 1 below the seat cushion 4 and is hence not visible. A trimming 7 extends along the opposing lateral sides of the seat pan 5. Each lateral side of the seat back 3 comprises an airbag 101A; 101B. A wrap-around belt arrangement 200A, 200B extends along an outer surface of each lateral airbag 101A; 101B. As will be described below, the wrap-around belt arrangement 200A, 200B comprises at least one belt 201A; 201B that extends from an upper end of the seat back 3, along the lateral side of the seat back 3, along the seat pan 5 and down to a tensioning device 300 that is arranged underneath the seat pan 5 or vehicle seat 1. The tensioning device 300 is hidden underneath the vehicle seat 1 but can be seen in Fig. 3.

The airbags 101A; 101B and wrap-around belt arrangements 200A, 200B are arranged inside the upholstery 6. The upholstery 6 is configured to rupture as the airbags 101A; 101B are inflated and deployed.

Each airbag 101A; 101B is connected to an inflator (not illustrated) which is turn is connected to an Electrical Control Unit (ECU). This is all well known to the skilled person and not further discussed.

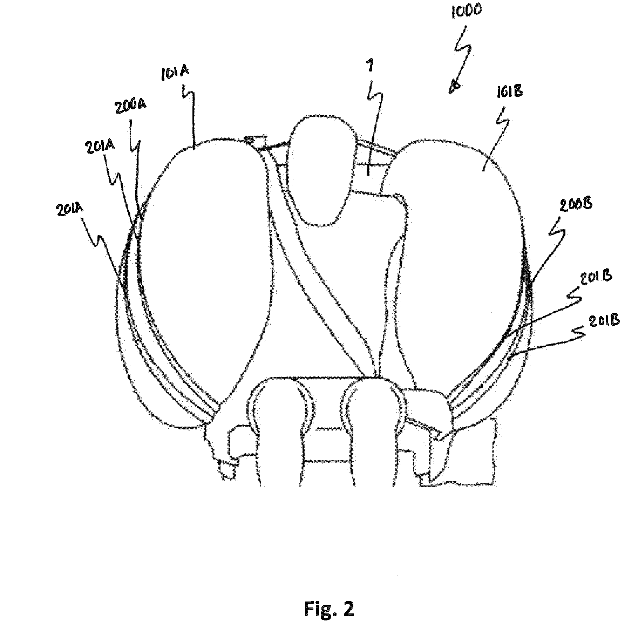

Turning to Fig. 2, the seat-mounted airbag assembly 1000 is disclosed in a condition where the two lateral airbags 101A; 101B have been inflated and fully deployed. The two airbags 101A; 101B are disclosed as being mirrored, i.e., having the same design on both sides of the vehicle seat 1. The skilled person realizes that the airbags 101A; 101B may be designed in a number of different ways depending on which parts of the body of the seated passenger they are intended to protect. As a non-limiting example, the airbags 101A; 101B may be designed to provide not only a sidewards protection but also a frontal protection. Also, it is to be understood that the two airbags 101A; 101B may have different designs. It is further to be understood that one of the airbags 101A; 101B may be omitted. The seat-mounted airbag assembly 1000 may accordingly comprise one lateral airbag only.

The first lateral airbag 101A is associated with a first wrap-around belt arrangement 200A and the second lateral airbag 101B is associated with a second wrap-around belt arrangement 200B. The at least one belt of each 201A, 201B of each wrap-around belt arrangement 200A, 200B is configured to be tensioned and form a reaction surface to its associated airbag 101A; 101B when the airbag 101A; 101B is inflated and deployed.

As can be seen in Fig. 2, each wrap-around belt arrangement 200A, 200B may comprise more than one belt 201A, 201B. Fig. 2 discloses an embodiment where each wrap-around belt arrangement 200A, 200B comprises two belts 201A, 201B that run side by side. The belt arrangements 200A, 200B connect to one and the same tensioning device (omitted in Fig. 2). It is to be understood that each belt arrangements 200A, 200B may connect to its own tensioning device.

Now turning to Fig. 3, a side view of a vehicle seat 1 is disclosed. The vehicle seat 1 is disclosed in a condition where the lateral airbag 101A has been inflated and fully deployed. Due to the side view, only one airbag 101A and one wrap-around belt arrangement 200A is shown. A corresponding arrangement may be arranged on the opposite lateral side of the vehicle seat 1. The arrangement on the opposite side may have the same design and functionality, whereby only one of the two is discussed below.

The trimming 7 on the vehicle seat 1 (see Fig. 1) has been removed to better illustrate the seat pan 5 and the tensioning device 300.

The wrap-around belt arrangement 200A comprises a belt 201A having an upper end 202A that is fixedly connected to a top portion of the seat back 3, and a lower end 203A that is fixedly connected to a tensioning device 300 that is arranged underneath the seat pan 5. The tensioning device 300 may with remained functionality be supported by the vehicle seat or by the vehicle floor. As given above, the wrap-around belt arrangement 200A may comprise more than one belt 201A. Fig. 3 discloses two belts that connect to the tensioning device 300, but only one of them is described. It is to be stressed that the wrap-around belt arrangement may comprise one belt only or more than two belts.

The belt 201A extends along an exterior side of the inflated airbag 101A. The belt 201A is disclosed as having a substantially flat cross section along its interface with the airbag 101A. The belt 201A forms a reaction surface to the associated airbag 101A during inflation and deployment of the airbag 101A. The belt 201A may be seen as an external tether that forces the airbag 101A to conform to the body of the seated passenger.

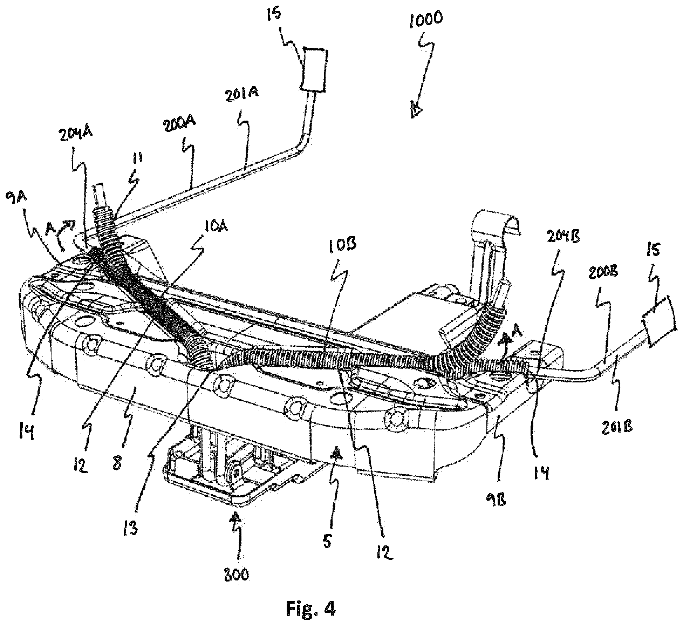

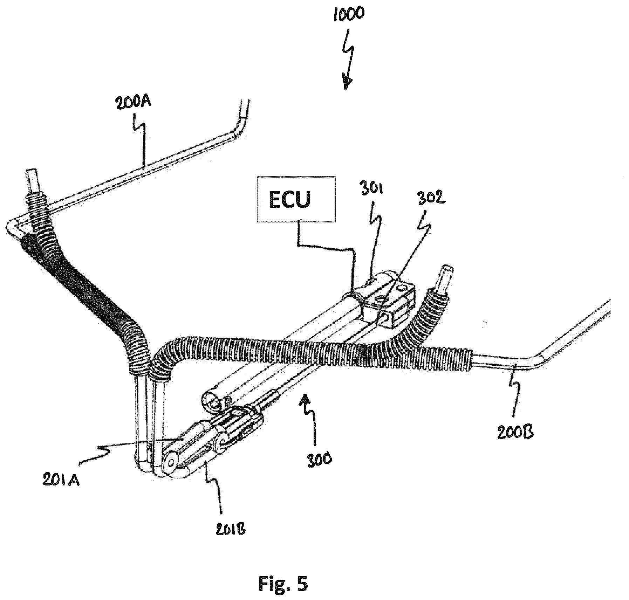

Now turning to Figs. 4 and 5, the interface between the belts 201A, 201B of two wrap-around belt arrangements 200A, 200B and the seat pan 5 is disclosed. The seat cushion 4 and the trimming 7 have been omitted to increase understanding.

The embodiment of Figs. 4 and 5 refers to a seat-mounted airbag assembly 1000 using two lateral airbags and hence two wrap-around belt arrangements 200A, 200B.

It is to be noted that Figs. 4 and 5 disclose the assembly 1000 in both its packing position (non-activated condition) and its crash position (activated condition). The transition from the packing position to the crash position is achieved by causing a lifting of the two tubes 10A; 10B which will be discussed below. The lifting is illustrated by arrow A.

The two wrap-around belt arrangements 200A, 200B have the same design and functionality, whereby only one will be discussed in detail.

Starting with Fig. 4, the exemplified seat pan 5 comprises a front pan cross member 8 that merges with two seat pan side structures 9A; 9B. The seat pan 5 is typically made by pressed sheet metal. It is to be understood that the actual design of the seat pan 5 is specific for different seat types and varies between different manufacturers and different vehicle brands. Hence, the disclosed seat pan 5 is to be seen as a non-restrictive example.

The seat pan 5 is disclosed as being arranged above the tensioning device 300. The tensioning device 300 may by way of example be supported by the lower side of the seat pan 5 or be fixedly arranged to a floor of the vehicle.

Turning to Fig. 5, the same view as in Fig. 4 is disclosed but with the seat pan 5 omitted. The tensioning device 300 comprises an actuator 301 and a pulling arrangement 302. The actuator 301 may be a pyrotechnically operated piston (arranged inside the actuator) which in one end is connected to the pulling arrangement 302. The pulling arrangement 302 is in turn connected to the lower ends 203A, 203B of the belts 201A, 201B of the respective wrap-around belt arrangements 200A, 200B. One and the same tensioning device 300 is disclosed as connecting to both wrap-around belt arrangements 200A, 200B. The tensioning device 300 is preferably centrally arranged underneath the seat pan 5.

The tensioning device 300 is configured to be operatively connected to the ECU and be activated upon a detected accident that is determined to be able to be mitigated by the seat-mounted airbag assembly 1000.

Now turning to Fig. 4 anew. The following description will, unless nothing else is stated, refer to the packing position.

A lower end portion of the belt 201A from the first wrap-around belt arrangement 200A, extends along the first seat pan side structure 9A. A portion of the belt 201B from the second wrap-around belt arrangement 200B, extends along the second seat pan side structure 9B.

The respective belt 201A, 201B extends from an upper portion of a seat back 3 (excluded in Fig. 4, but best seen in Fig. 3) to the common tensioning device 300 that is arranged underneath the seat pan 5. More precisely, a lower end portion of each belt 201A, 201B extends along an upper surface of the seat pan 5 towards a position underneath the seat pan 5 where it connects to the tensioning device 300. The lower end portion of the respective belt 201A, 201B is received in a respective tube 10A, 10B.

The tubes 10A, 10B may be made of a plastic material, a composite material or even a metal material.

The tubes 10A, 10B are bendable and flexible along their longitudinal extensions. The tubes 10A, 10B, and thereby the belt portions that are received in the tubes 10A, 10B, can thereby be forced to extend in a desired direction to thereby adapt to the available space in the seat pan 5 or in the interface between the seat pan 5 and the seat cushion 4.

The respective tube 10A, 10B is preferably substantially form rigid as seen in a direction transverse its diameter. The belt portions 201A, 201B that are received in the tubes 10A, 10B will thereby not be pinched inside the tubes 10A, 10B by the weight of the seated passenger. In the context of the invention, the term *"substantially form rigid"* is to be understood as that the tube 10A, 10B when arranged in the vehicle seat 1 is rigid enough to bear the weight of a seated passenger without being so deformed that the belt portion that is received in the tube 10A, 10B will be pinched. The skilled person realizes that it is not only the weight of the passenger as such that is of relevance to any deformation of the tube 10A, 10B, but also the design of the seat pan 5 and the design of the seat cushion 4.

The tubes 10A, 10B are disclosed as being inner-ribbed tubes. The ribs 11 run along the inner surface of the tubes 10A, 10B in a spiral shaped pattern, thereby creating a series of raised structures or grooves. This tube type is by way of example typically used as a vacuum cleaner hose or for bundling of cables. The ribbed tubes 10A, 10B are flexible and bendable which allows a great degree of freedom when arranging the tubes 10A, 10B across the seat pan 5 in the available interspace between the seat pan 5 and the seat cushion 4. The ribs 11 further provide a non-continuous contact surface with the wrap-around belt portion that is received inside the respective tube 10A, 10B. The non-continuous contact surface provides a reduced friction.

The tubes 10A, 10B are disclosed as being received in a respective groove 12 in the top side of the seat pan 5. The respective groove 12 is in the disclosed embodiment disclosed as having a generally straight extension where the groove 12 extends diagonally from a centrally arranged through-going hole 13 towards a lateral edge portion of the seat pan side member 9A, 9B. It is realized that the grooves 12 may have other extensions with remained functionality. The grooves 12 may by way of example extend also along a portion in parallel or substantially in parallel with the seat pan side members 9A, 9B. Also, the grooves 12 may by way of example extend along a lateral side wall of the respective seat pan side member 9A, 9B.

The grooves 12 may have a depth that allows the tubes 10A, 10B to be fully, or at least partially countersunk into the seat pan 5.

The tubes 10A, 10B may be held in place in the grooves 12 by one or more clips and/or a snap fit. The clips or snap-fit should preferably allow the tubes 10A, 10B to lift from the grooves 12 at least partially when tensioning the belts 201A, 201B by means of the tensioning device 300. The lifting, see arrow A, sets the tube 10A, 10B from their packing positions to their crash positions.

In the event of a clip, the clip is preferably designed to break as a result of the belts 201A, 201B being tensioned by the tensioning device 300 and the inflation of the airbag.

The tubes 10A, 10B may, as is best seen in Fig. 4, extend at least partly through the thorough-going hole 13 in the seat pan 5.

The portion 204A, 204B of the wrap-around belt portions 201A, 201B being received in a respective tube 10A, 10B is disclosed as being embodied as a cord. The term *"cord"* should in the context of the invention be understood as a long, slender rope, string or even a chain. The cross section of the cord may by way of example be circular or substantially circular. The cord may have a homogenous cross section or be made up of several strands twisted or woven together.

The cord may be joined to the rest of the belt 201A, 201B somewhere along a section of the wrap-around belt portion that extends from a position below the airbag 100A; 100B to a mouth 14 of the tube 10A, 10B where the mouth faces the seat back 3. The joint 15 between the cord and the belt may more preferred be arranged along a section of the wrap-around belt portion 201A, 201B that extends from a position below the airbag 101A; 101B and above the cross bar 16 that pivotably connects the seat back 3 to the seat pan 5. This cross bar 16 is best seen in Fig. 3.

As opposed to the cord having a circular or substantially circular cross section, the belt 201A, 201B that extends along the airbag has a substantially flat cross section. The inventors have realized that a cord bends easier in three dimensions than a belt having a flat cross section, which is the case when guiding the wrap-around belt portion 201A, 201B along and through the seat pan 5 to the tensioning device 300. Further, a cord has a smaller contact surface with the tube 10A, 10B, which in turn provides a lower friction when pulling the wrap-around belt portion 201A, 201B by means of the tensioning device 300.

Nonetheless, the skilled person realises that the wrap-around belt portion 201A, 201B with remained functionality may have a uniform cross section along its full extension between its upper connection 202A to the seat back 3 and its lower connection 203A to the tensioning device 300. Hence, the belt may with remained functionality have a substantially flat cross section along its full extension or be a cord having a circular or substantially circular cross section along its full extension.

In the following, the operation principle of the seat-mounted airbag assembly 1000 will be described.

Should the ECU, based on sensor information, determine that there is an ongoing accident that could be mitigated by means of the lateral airbags 101A, 101B, the ECU will activate the inflators of the lateral airbags 101A, 101B. The airbags 101A, 101B will thereby inflate and deploy as is illustrated in Figs. 2 and 3. Concurrently, the ECU, see Fig. 5, will activate the tensioning device 300 that is arranged underneath the seat pan 5. The tensioning device 300 will pull the wrap-around belt portions 201A, 201B that are connected to the tensioning device 300 so that the belts are tensioned to thereby form reaction surfaces for the two lateral airbags 101A, 101B.

Now turning to Fig. 4. As the belts are tensioned by means of the tensioning device 300, the tubes 10A, 10B that receive a respective portion of the belts 201A, 201B will partly lift, see arrow A, from their packing positions (non-activated conditions) and assume their crash positions (activated conditions). The lifting of the tubes 10A, 10B into their crash positions will be accommodated by the inherent flexibility of the seat cushion 4.

Since the belts 201A, 201B are running inside a respective tube 10A, 10B, the friction along the interior of the tubes 10A, 10B will be very low as compared to prior art where the belts are arranged to run in the interface between the seat pan 5 and the seat cushion 4 and hence in direct frictional contact with both the seat pan 5 and the seat cushion 4.

Further, the tubes 10A, 10B safeguard that the belts 201A, 101B are not unduly pinched. It should be understood that the tubes may be rigid tubes. However, by using bendable and flexible tubes 10A, 10B, the risk of the belts being cut by any sharp ends of the tubes is reduced during the sudden tensioning of the belts.

The belts 201A, 201B are arranged with a slack until being tensioned. By encapsulating the belts 201A, 201B inside a respective tube 10A; 10B the risk of undue noise during normal operation of the vehicle seat 1 is reduced. This should be compared to prior art where the belt is freely received in the interface between the seat pan 5 and seat cushion 4 respectively, and where the frictional contact between the surfaces may cause a noise.

The tubes 10A, 10B may be arranged to extend in any suitable direction along the seat pan 5 from the tensioning device 300 towards the seat back 3. The extension may be any suitable extension depending on the available space between the seat cushion 4 and the seat pan 5, and depending on the specific design and curvature of the seat pan 5. The use of tubes allow a facilitated adaption of the assembly to fit different vehicle seats since different vehicle manufacturers have their own seat designs.

Further, and not at least, by arranging a portion of the belt 201A, 201B inside a tube 10A, 10B, said belt portion may run freely along the interior of the tube 10A, 10B without being pinched due to the weight of the seated passenger. Although it is to be understood that the seat cushion 4 as such will be able to resiliently accommodate the major part of the weight of the seated passenger and also the outer shape of the tubes 10A, 10B, the tubes should be rigid enough as seen in their cross-directions not to be squeezed to such extent that the belts 201A, 201B are pinched inside the tubes 10A, 10B.

It is realized by a person skilled in the art that features from various embodiments disclosed herein may be combined with one another to provide further alternative embodiments.

## Claims

1. A seat-mounted airbag assembly (1000) comprising:
a first lateral airbag (101A) configured to deploy adjacent to a first side of a vehicle seat (1);
a first wrap-around belt (201A) extending from an upper portion of a seat back (3) to a tensioning device (300) arranged at least partly underneath a seat pan (5), and wherein the first wrap-around belt (201A) is configured to be tensioned and form a reaction surface to the first airbag (100A); wherein
a lower end of the first wrap-around belt (201A) extends along a surface of the seat pan (5) towards a lower side of the seat pan (5) where it connects to the tensioning device (300); and
wherein a portion of the lower end of the first wrap-around belt (201A) is received in a first tube (10A).

2. The seat-mounted airbag assembly according to claim 1, further comprising:
a second lateral airbag (100B) configured to deploy adjacent to a second side of the vehicle seat (1);
a second wrap-around belt (201B) extending from an upper portion of the seat back (3) to a tensioning device (300) arranged at least partly underneath the seat pan (5), and wherein the second wrap-around belt (201B) is configured to be tensioned and form a reaction surface to the second airbag (100B); wherein
a lower end of the second wrap-around belt (201B) extends along a surface of the seat pan (5) towards the lower side of the seat pan (5) where it connects to the tensioning device (300); and
wherein a portion of the lower end of the second wrap-around belt (201B) is received in a second tube (10B).

3. The seat-mounted airbag assembly according to claim 1 or 2, wherein the first and second tubes (10A, 10B) are bendable and flexible along their longitudinal extensions.

4. The seat-mounted airbag assembly according to any of the preceding claims,
wherein the first and second tubes (10A, 10B) are substantially form rigid as seen in a direction transverse their diameters.

5. The seat-mounted airbag assembly according to any of the preceding claims,
wherein the first and the second tubes (10A, 10B) are inner-ribbed tubes.

6. The seat-mounted airbag assembly according to any of the preceding claims, wherein the portions of the first and the second wrap-around belts (201A, 201B) being received in a respective tube (10A, 10B) is a cord.

7. The seat-mounted airbag assembly according to any of the preceding claims, wherein the first and the second tubes (10A, 10B) are received in a groove (12) in a top side of the seat pan (5); and/or wherein the first and the second tubes (10A, 10B) are received in a groove (12) in a side wall of the seat pan (5).

8. The seat-mounted airbag assembly according to claim 7, wherein the respective tube (10A, 10B) is held in place in the groove (12) by one or more clips or a snap fit.

9. The seat-mounted airbag assembly according to any of the preceding claims, wherein the first and the second tubes (10A, 10B) are arranged between the seat pan (5) and a seat cushion (4) covering the seat pan (5).

10. The seat-mounted airbag assembly according to claim 2, wherein the first and the second wrap-around belts (201A, 201B) connect to a common tensioning device (300).

11. The seat-mounted airbag assembly according to claim 10, wherein the common tensioning device (300) is arranged centrally underneath the seat pan (5).

12. Use of a seat-mounted airbag assembly according to any of claims 1-11 in a vehicle seat (1).

## Amended claims

### Amended claims in accordance with Rule 137(2) EPC.

1. A seat-mounted airbag assembly (1000) comprising:
a first lateral airbag (101A) configured to deploy adjacent to a first side of a vehicle seat (1) and a second lateral airbag (100B) configured to deploy adjacent to a second side of the vehicle seat (1);
a first wrap-around belt (201A) extending from an upper portion of a seat back (3) to a tensioning device (300) arranged at least partly underneath a seat pan (5), and wherein the first wrap-around belt (201A) is configured to be tensioned and form a reaction surface to the first airbag (100A);
a second wrap-around belt (201B) extending from an upper portion of the seat back (3) to a tensioning device (300) arranged at least partly underneath the seat pan (5), and wherein the second wrap-around belt (201B) is configured to be tensioned and form a reaction surface to the second airbag (100B); wherein
the first and second wrap-around belts (201A, 201B) connect to a common tensioning device or to different tensioning devices; and wherein
a lower end of the first wrap-around belt (201A) extends along a surface of the seat pan (5) towards a lower side of the seat pan (5) where it connects to the tensioning device (300), and a lower end of the second wrap-around belt (201B) extends along a surface of the seat pan (5) towards the lower side of the seat pan (5) where it connects to the tensioning device (300); and
wherein a portion of the lower end of the first wrap-around belt (201A) is received in a first tube (10A) and a portion of the lower end of the second wrap-around belt (201B) is received in a second tube (10B).

2. The seat-mounted airbag assembly according to claim 1, wherein the first and second tubes (10A, 10B) are bendable and flexible along their longitudinal extensions.

3. The seat-mounted airbag assembly according to claim 1 or 2,
wherein the first and second tubes (10A, 10B) are substantially form rigid as seen in a direction transverse their diameters.

4. The seat-mounted airbag assembly according to any of the preceding claims,
wherein the first and the second tubes (10A, 10B) are inner-ribbed tubes.

5. The seat-mounted airbag assembly according to any of the preceding claims,
wherein the portions of the first and the second wrap-around belts (201A, 201B) being received in a respective tube (10A, 10B) is a cord.

6. The seat-mounted airbag assembly according to any of the preceding claims,
wherein the first and the second tubes (10A, 10B) are received in a groove (12) in a top side of the seat pan (5); and/or wherein the first and the second tubes (10A, 10B) are received in a groove (12) in a side wall of the seat pan (5).

7. The seat-mounted airbag assembly according to claim 6, wherein the respective tube (10A, 10B) is held in place in the groove (12) by one or more clips or a snap fit.

8. The seat-mounted airbag assembly according to any of the preceding claims,
wherein the first and the second tubes (10A, 10B) are arranged between the seat pan (5) and a seat cushion (4) covering the seat pan (5).

9. The seat-mounted airbag assembly according to claim 1, wherein the first and the second wrap-around belts (201A, 201B) connect to a common tensioning device (300) that is arranged centrally underneath the seat pan (5).

10. Use of a seat-mounted airbag assembly according to any of claims 1-9 in a vehicle seat (1).
